# DEMANDE DE BREVET EUROPEEN

(11) **EP 3 339 144 A1**
(43) Date de publication de la demande: **27.06.2018**
(21) Numéro de dépôt: 17207760.4
(22) Date de dépôt: 15.12.2017
(51) Int. Cl.: B62D 29/00

(54) **ELÉMENT AUTOMOBILE EN MATÉRIAU THERMODURCISSABLE COMPRENANT AU MOINS UN CLIP**

(30) Priorité: 15.12.2016 FR 1662544
(71) Demandeur: Compagnie Plastic Omnium, 69007 Lyon (FR)
(72) Inventeur: SAGER, Mustafa, 69100 VILLEURBANNE (FR); BOISSON, Damien, 69007 LYON (FR); VILQUIN, Gilles, 69100 VILLEURBANNE (FR)
(74) Mandataire: LLR

(57) **Abrégé**

L'invention concerne un élément (2) de véhicule automobile réalisé en matériau thermodurcissable, caractérisé en ce que l'élément (2) comprend au moins un clip (8) de fixation de l'élément (2) à un autre élément (16) de véhicule automobile, le clip (8) étant réalisé dans un matériau thermodurcissable comprenant une charge élastomère.

## Description

L'invention concerne les éléments de carrosserie pour véhicule automobile et plus particulièrement les éléments réalisés en matériau thermodurcissable.

De tels éléments peuvent être assemblés avec un autre élément, par exemple un élément réalisé dans un matériau thermoplastique ou encore un élément en acier ou en aluminium, afin de réaliser différentes pièces d'un véhicule comme par exemple un hayon.

L'assemblage d'un élément en matériau thermodurcissable avec un autre élément peut se faire par collage. Quand cet assemblage par collage doit présenter une robustesse mécanique élevée, il est nécessaire d'utiliser une colle performante dont le temps de polymérisation totale est supérieur au temps de cycle requis pour assurer le volume de production requis. On utilise alors un collage par l'intermédiaire de deux cordons de colles adjacents de nature et de rôle différents. La première colle présente une résistance mécanique forte mais est longue à polymériser. Cette colle est dite « structurelle ». La deuxième colle sèche rapidement mais présente une résistance mécanique relativement faible. Cette colle est dite « non structurelle ».

Lors de l'assemblage, les deux cordons de colle sont déposés par un opérateur ou un robot sur l'un ou l'autre des deux éléments puis les deux éléments sont assemblés. La deuxième colle, rapidement polymérisée, permet, alors que la première colle structurelle n'est pas entièrement polymérisée, de pouvoir manipuler l'ensemble des deux éléments reliés sans pour autant risquer de déplacer un élément par rapport à l'autre ou d'abîmer le cordon de la deuxième colle. L'ensemble peut ainsi être rapidement enlevé du poste de collage et transporté vers une zone de stockage temporaire dédiée afin de libérer la zone d'assemblage. Le deuxième cordon de colle va alors permettre le maintien des deux éléments l'un avec l'autre pendant la polymérisation du premier cordon de colle. Une fois le premier cordon de colle polymérisé, les deux éléments sont solidement maintenus l'un à l'autre par le premier cordon de colle.

Un tel procédé nécessite la pose de deux cordons de colle, ainsi que l'aménagement d'une zone spécifique de stockage des ensembles d'éléments pendant la polymérisation totale de la colle structurelle. Il s'agit donc d'un procédé long et couteux, car il faut déposer deux cordons de colle puis stocker les ensembles d'éléments ce qui ajoute des opérations de manutention. De plus, la présence de deux cordons de colle ajoute du poids à l'ensemble, la 1^{ère} colle ne servant surtout qu'au pré-assemblage et impose des contraintes de conception sur chaque élément pour pouvoir y aménager une surface de dépose de colle plus grande pour y placer les deux cordons.

Alternativement, il est possible de fixer les deux éléments l'un avec l'autre par l'intermédiaire de vis et/ou de rivets. C'est le cas notamment de la fixation d'éléments composite sur une caisse en aluminium ou d'un assemblage mixte par collage/vissage ou collage/rivetage dans lequel les rivets ou les vis permettent un pré-maintien comme le second cordon de colle énoncé précédemment.

Cependant, de tels dispositifs sont assujettis à des phénomènes d'oxydo-réduction dans le cas d'une interaction entre le carbone et le fer. Cela entraîne une fragilisation du dispositif de fixation se propageant au sein des éléments et conduisant à leur fragilisation. De plus, l'utilisation de vis ou de rivets augmente le nombre d'éléments de fixation à utiliser pour réaliser l'assemblage et nécessité un nombre important d'interventions d'un opérateur.

Un but de l'invention de limiter tout ou partie des inconvénients précités, en proposant un élément de véhicule automobile permettant un assemblage avec un second élément, assemblage plus rapide, moins coûteux et nécessitant moins d'éléments que dans l'art antérieur cité auparavant.

Dans ce but, l'invention a pour objet un élément de véhicule automobile réalisé en matériau thermodurcissable et comprenant au moins un clip de fixation de l'élément à un autre élément de véhicule automobile, le clip étant réalisé dans un matériau thermodurcissable comprenant une charge élastomère.

Ainsi, un tel élément est fixé à un autre élément par l'intermédiaire de ce ou de ces clips, clips réalisés lors du moulage de la pièce grâce à la compatibilité entre les matériaux thermodurcissables de l'élément et du ou des clips. Il n'est donc plus nécessaire de disposer deux cordons de colles mais seulement un cordon de colle structurelle, ce qui permet d'utiliser moins de matériaux et de diminuer le temps d'action d'un opérateur lors de l'assemblage.

L'élément selon l'invention peut optionnellement comprendre une ou plusieurs des caractéristiques suivantes :
- un ancrage entre le clip et l'élément est assurée par une embase, cette embase étant réalisés dans un matériau thermodurcissable comprenant une charge élastomère ;
- l'élément et le clip sont réalisés dans un matériau comprenant une résine choisie parmi les résines polyester, vinylester et époxyde ;
- l'élément comprend entre 10 et 30 clips répartis sur l'élément ;
- l'élément comprend au moins un organe de centrage de l'élément avec l'autre élément.

On prévoit également selon l'invention un ensemble d'un élément selon l'invention et d'un second élément de véhicule automobile comprenant au moins un orifice apte à recevoir le clip du premier élément.

Avantageusement, les deux éléments sont en outre maintenus ensemble par l'intermédiaire d'un cordon de colle.

On prévoit également selon l'invention un procédé de fabrication d'un élément de véhicule automobile réalisé en matériau thermodurcissable et comprenant au moins un clip de fixation de l'élément à un autre élément, caractérisé en ce qu'il comprend les étapes suivantes :
- on place une feuille de matériau thermodurcissable dans un moule, la feuille comprenant à sa surface une bande en matériau thermodurcissable comprenant une charge élastomère, la bande étant placée en partie en regard d'au moins une cavité ménagée dans une partie inférieure du moule,
- on ferme le moule,
- on exerce une pression sur la feuille, le matériau thermodurcissable comprenant une charge élastomère entrant dans la cavité,
- on ouvre le moule,
on extrait l'élément formé du moule.

Le procédé selon l'invention peut optionnellement comprendre une ou plusieurs des caractéristiques suivantes :
- la bande ne pénètre pas entièrement dans la cavité ;
- on utilise une feuille (29) permettant de combler des cavités d'une partie inférieure (28) du moule.

Nous allons maintenant présenter un mode de réalisation de l'invention à l'appui des figures annexées, qui sont fournies à titre d'exemples et ne présentent aucun caractère limitatif, dans lesquelles :
- la figure 1 est une représentation schématique d'un élément de véhicule automobile selon l'invention ;
- la figure 2 est une représentation schématique d'un ensemble de l'élément de véhicule de la figure 1 et d'un second élément de véhicule automobile, et ;
- les figures 3 à 6 sont des représentations schématiques d'un procédé de moulage de l'élément de la figure 1 ;
- les figures 7 à 9 sont des représentations schématiques de l'assemblage de l'ensemble de la figure 2 ;
- les figures 10 et 11 sont des vues schématiques d'une variante d'assemblage d'un ensemble selon l'invention.

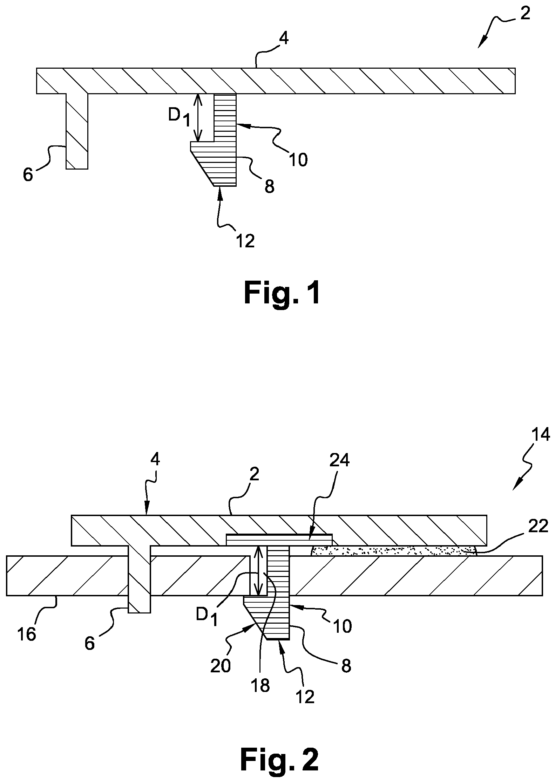

On se réfère maintenant à la figure 1 qui représente un premier élément 2 de véhicule automobile destiné à être assemblé avec un autre élément afin de former une pièce d'une voiture comme par exemple un hayon. Cet élément est réalisé dans un matériau thermodurcissable, de préférence en SMC (« Sheet Moulding Compound »), c'est-à-dire un matériau comprenant une résine thermodurcissable qui imprègne des fibres de renfort en verre ou en carbone, avec notamment des charges et un catalyseur.

L'élément 2 est réalisé dans un matériau thermodurcissable comprenant une résine choisie parmi les résines polyester, vinylester et époxyde.

Selon l'exemple de la figure 1, l'élément 2 comprend une portion principale 4 formant un panneau.

L'élément 2 comprend également un clip 8 permettant la fixation de l'élément 2 à un autre élément. Ce clip 8 est relié par moulage à l'élément 2. De préférence le clip 8 est réalisé dans un matériau chimiquement compatible avec le matériau thermodurcissable de l'élément 2, de préférence du SMC, comprenant cependant une charge élastomère. Une telle résine peut également contenir un pourcentage inférieur en fibres de renfort. On peut citer par exemple la résine polyester insaturée « CRYSTIC® S15.6 » produite par la société SCOTT BADER à laquelle on ajoute des fibres de renfort. On peut citer comme exemple de SMC comprenant une charge élastomère le brevet EP 0 719 819 décrivant un tel matériau. La résine utilisée pour réaliser le clip 8 peut être choisie parmi les mêmes résines que celles utilisées pour la réalisation de la portion principale 4 de l'élément 2.

La charge élastomère va alors conférer une certaine élasticité, par exemple de l'ordre de 50% d'élongation, au clip 8 permettant son clipsage. Ceci ne serait pas envisageable avec un clip en matériau thermodurcissable classique présentant une élasticité trop faible. Le fait d'utiliser un matériau thermodurcissable permet de garantir une compatibilité entre le clip 8 et la portion principale 4 lors du moulage du fait de leur chimie estérique commune, comme cela sera illustré ultérieurement.

L'élément 2 comprend un, de préférence plusieurs, organe de centrage 6 permettant d'aligner le clip 8 présent sur l'élément 2 avec un orifice présent sur un autre élément destiné à être assemblé avec l'élément 2. Cet organe peut également jouer un rôle de renfort mécanique de l'élément 2.

Le clip 8 comprend un pied 10 s'étendant à partir de la portion principale 4 de l'élément 2 et localement perpendiculairement à cette portion principale 4. Le clip 8 comprend également une autre extrémité 12, appelé le nez, en saillie par rapport au tronçon 10 et s'étendant dans une direction localement parallèle à la portion principale 4.

Le nombre de clips, ainsi que leur forme, peuvent bien évidemment être différents de ce qui est illustré à la figure 1. Par exemple, l'élément 2 peut comprendre entre 10 et 30 clips répartis sur sa surface, lorsqu'il s'agit par exemple d'une peau de hayon d'un véhicule automobile.

La figure 2 illustre un ensemble 14 correspondant à un assemblage d'un élément 2 identique à l'élément de la figure 1 et d'un second élément 16. Il peut s'agir d'une doublure de hayon par exemple.

L'élément 16 peut être réalisé dans un matériau thermodurcissable comme l'élément 2 ou dans un autre matériau comme par exemple un matériau thermoplastique, de l'acier ou encore de l'aluminium. Il a une épaisseur identique à l'élément 2 sur la figure 2, cette épaisseur peut évidemment varier.

L'élément 16 comprend un orifice traversant 18 par lequel le clip 8 traverse l'élément 16 pour fixer à ce dernier l'élément 2. Il y a autant d'orifices 18 que de clips 8. Il est également possible que plusieurs clips 8 traversent l'élément 16 par un même trou ou que l'élément 16 ne présente aucun orifice 18, les clips 8 se fixant sur les bords de l'élément 16. Afin de faciliter le passage du clip 8 à travers l'orifice 18, l'extrémité 12 du clip 8 comprend une partie chanfreinée 20.

Selon cet exemple, l'ensemble 14 comprend également un cordon de colle 22 entre les deux éléments 2 et 16. Il s'agit d'un cordon de colle dite structurelle permettant une bonne fixation entre les deux éléments 2 et 16. Il est à noter que la hauteur D1 du pied de clip est égale à l'épaisseur de l'élément 16 à assembler avec l'élément 2 et du cordon de colle 22 écrasé entre les deux éléments.

On voit sur la figure 2 que le clip 8 comprend une embase 24 s'étendant en surface de l'élément 2, cette embase assurant un ancrage du pied de clip 8 à l'élément 2.

Lors de l'assemblage, les éléments sont disposés l'un en face de l'autre, les clips 8 étant en face des orifices 18. Le cordon de colle est préalablement appliqué, de préférence sur la périphérie d'un des deux éléments. Les deux éléments sont alors assemblés par l'exercice d'une pression relative entre les deux éléments. Cette pression permet simultanément d'engager les clips et ancrer les nez sur la face opposée du 2^{ème} élément et d'écraser le cordon de colle dont l'épaisseur déposée est supérieure à la cote restante entre les deux éléments 2 et 16 une fois assemblés.

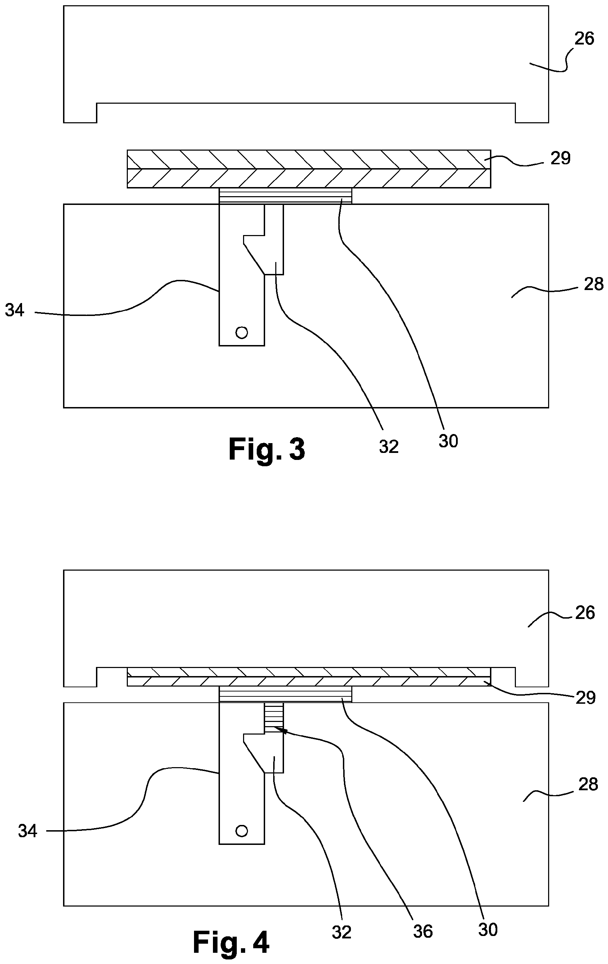

Les figures 3 à 6 illustrent le procédé de fabrication de l'élément 2.

Dans une première étape illustrée à la figure 3, on place dans un moule comprenant une partie supérieure 26 et un partie inférieure 28 une feuille 29 en matériau thermodurcissable, par exemple en SMC. Cette feuille 29 est le précurseur de l'élément 2. Une bande 30, plus petite que la feuille 29 est présente entre la feuille 29 et le partie inférieure 28. Cette bande 30 est le précurseur du clip 8. La bande 30 est réalisée en matériau thermodurcissable, par exemple en SMC, comprenant une charge élastomère. Cette bande 30 est localisée sur la partie inférieure 28 en regard d'un orifice 32 ménagé dans le partie inférieure 28 et présentant une cavité en forme de clip 8. La bande 30 est d'une taille et d'une épaisseur suffisante pour garantir un remplissage complet de la cavité 32.

Il est envisageable d'avoir, à la place de la bande 30, une série de pastilles en matériau thermodurcissable, par exemple en SMC, comprenant une charge élastomère. Il y a dans ce cas autant de pastilles et de cavités 32 qu'il y aura de clips 8 sur l'élément 2.

Dans une seconde étape, on ferme le moule afin que la partie supérieure 26 vienne au contact de la feuille 29.

Dans une troisième étape illustrée à la figure 4, la feuille 29 et la bande 30 commencent à être comprimées par le rapprochement entre la partie supérieure 26 et le partie inférieure 28. La feuille 29 et la bande 30 vont fluer (fluage non représenté). Une partie 36 de la bande 30 va alors pénétrer dans la cavité 32 sous l'effet de la compression. Cette pénétration est également possible par la présence d'un dispositif d'évacuation d'air ou encore par un dispositif de création d'un vide dans la cavité (non représentés).

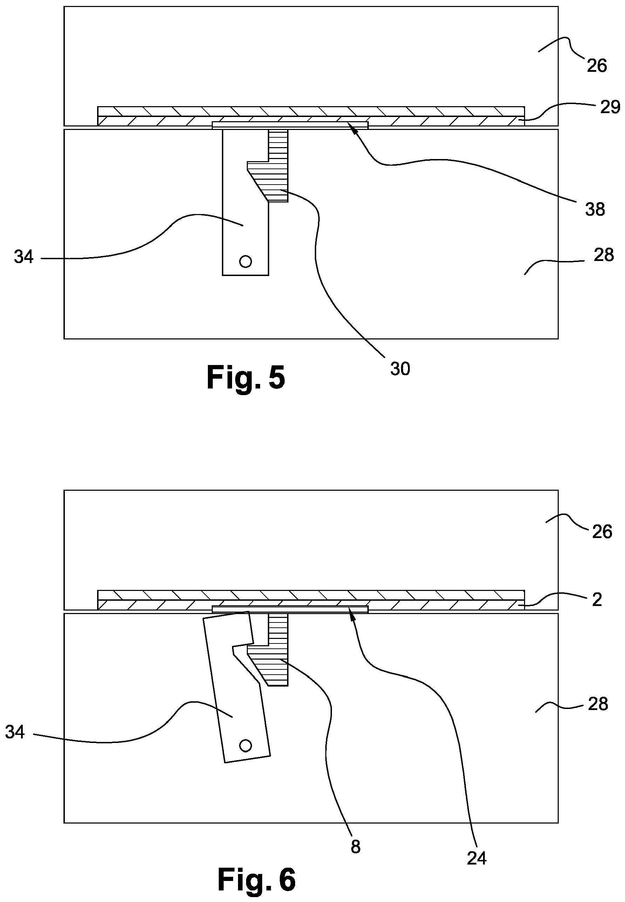

Dans une quatrième étape illustrée à la figure 5, la compression de la feuille 29 et de la bande 30 est terminée. La feuille 29 a une forme et une épaisseur identiques au futur élément 2. La cavité 32 a été intégralement remplie par la bande 30 qui a une forme identique à celle du clip 8 à l'intérieur de la cavité 32. Un excédent de matière 38 est plaqué contre la face inférieure de la feuille 29.

C'est lors de cette étape que la feuille 29 et la bande 30 vont être chauffées afin de polymériser pour obtenir l'élément 2 et le clip 8 solides.

La partie inférieure 28 comprend une cale basculante 34 formant une partie de la cavité 8, plus précisément la partie relative à l'extrémité 12 du futur clip 8, et destinée à basculer après formation du clip afin d'extraire l'élément 2 de la partie inférieure 28.

Dans une dernière étape illustrée à la figure 6, la polymérisation a eu lieu, l'élément 2 et le clip 8 sont alors extraits de la partie inférieure 28 grâce au basculement de la cale basculante 34. Le clip 8 est solidement ancré dans l'élément 2 par l'intermédiaire de la base 24. La compression permet également d'assurer une bonne liaison du clip 8 à l'élément 2.

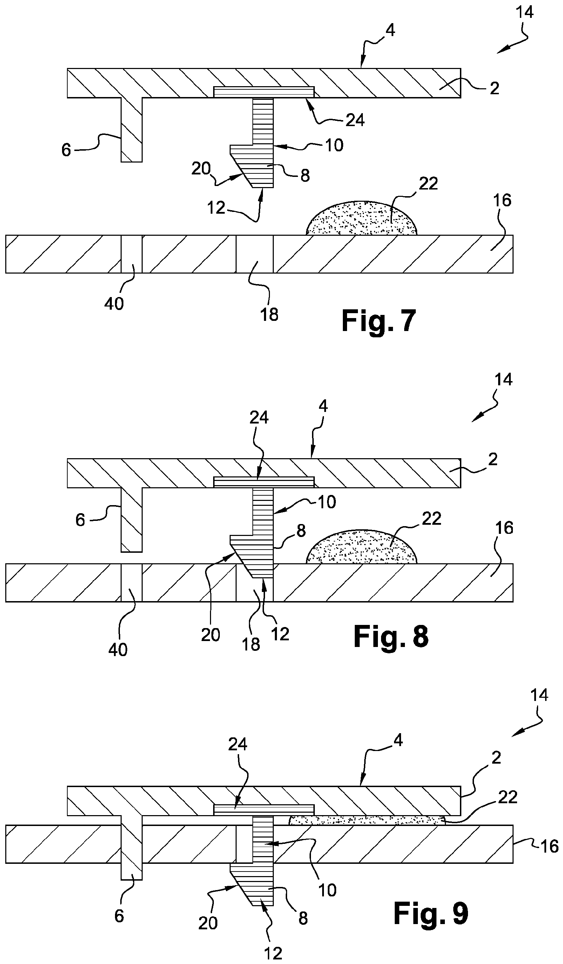

Les figures 7 à 9 représentent un procédé de montage d'un ensemble 14 composé des éléments 2 et 16.

Sur la figure 7, les deux éléments 2 et 16 sont placés de telle sorte que le clip 8 soit en regard de l'orifice 18 et que l'organe de centrage 6 soit par exemple en regard d'un orifice traversant 40 de l'élément 16. Les figures représentent seulement un clip 8 et un organe de centrage 6 mais il est possible d'avoir plusieurs clips 8 et plusieurs organes de centrage 6, leurs nombres respectifs pouvant être identiques ou différents. L'organe de centrage 6 peut interagir avec un orifice comme illustré sur les figures ou bien avec d'autres types de structures, par exemple deux nervures entre lesquelles l'élément de centrage 6 vient se loger.

Les figures 8 et 9 illustrent le rapprochement entre les deux éléments 2 et 16. La collaboration entre l'organe de centrage 6 et l'orifice traversant 40 permet d'assurer le bon alignement du clip 8 avec l'orifice traversant 18 afin d'éviter que le clip ne s'engage pas correctement dans l'orifice 18, ce qui pourrait engendrer une torsion voire une cassure du clip 8 donc potentiellement un mauvais plaquage lors de la polymérisation de la colle structurelle.

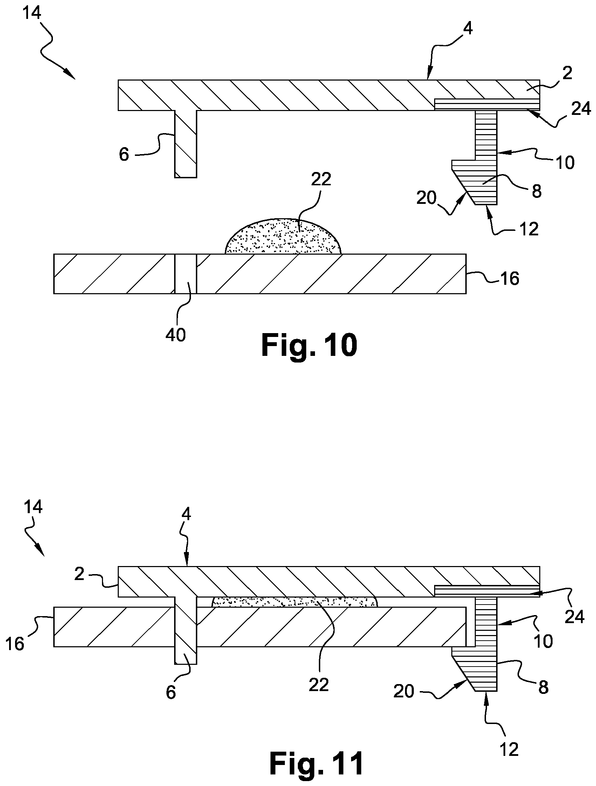

Les figures 10 et 11 illustrent une variante de l'assemblage des éléments 2 et 16. Ici, le clip 8 ne collabore plus avec un orifice traversant ménagé dans l'élément 16 mais avec le bord de l'élément 16. L'alignement du clip 8 avec le bord de l'élément 16 est assurée par l'organe de centrage 6.

L'invention n'est pas limitée aux modes de réalisation présentés et d'autres modes de réalisation apparaîtront clairement à l'homme du métier.

Il est notamment possible, comme cela a été souligné auparavant, de faire varier la forme et le nombre de clips 8 sur l'élément 2.

### Nomenclature

2 : élément de véhicule automobile
4 : portion principale
6 : organe de centrage
8 : clip
10 : tronçon du clip
12 : extrémité recourbée
14 : ensemble
16 : second élément de véhicule automobile
18 : orifice complémentaire du clip
20 : chanfrein
22 : cordon de colle
24 : base du clip
26 : partie supérieure du moule
28 : partie inférieure du moule
29 : feuille en matériau thermodurcissable
30 : bande en matériau thermodurcissable comprenant une charge élastomère
32 : cavité
34 : cale basculante
36 : partie de la bande 30 pénétrant dans la cavité
38 : excédent de matière
40 : orifice complémentaire de l'organe de centrage

## Revendications

1. Élément (2) de véhicule automobile réalisé en matériau thermodurcissable, **caractérisé en ce que** l'élément (2) comprend au moins un clip (8) de fixation de l'élément (2) à un autre élément (16) de véhicule automobile, le clip (8) étant réalisé dans un matériau thermodurcissable comprenant une charge élastomère.

2. Élément (2) selon la revendication 1, dans laquelle un ancrage entre le clip (8) et l'élément (2) est assurée par une embase (24), cette embase étant réalisés dans un matériau thermodurcissable comprenant une charge élastomère.

3. Elément (2) selon l'une quelconque des revendications précédentes, dans lequel l'élément (2) et le clip (8) sont réalisés dans un matériau comprenant une résine choisie parmi les résines polyester, vinylester et époxyde.

4. Élément (2) selon l'une quelconque des revendications précédentes, l'élément (2) comprenant entre 10 et 30 clips (8) répartis sur l'élément (2).

5. Élément (2) selon l'une quelconque des revendications précédentes comprenant au moins un organe de centrage (6) de l'élément 2 avec l'autre élément (16).

6. Ensemble d'un élément (2) de véhicule selon l'une quelconque des revendications précédentes et d'un second élément (16) de véhicule automobile comprenant au moins un orifice (18) apte à recevoir le clip (8) du premier élément (2).

7. Ensemble selon la revendications 6, dans lequel les deux éléments (2, 16) sont en outre maintenus ensemble par l'intermédiaire d'un cordon de colle (22).

8. Procédé de fabrication d'un élément (2) de véhicule automobile réalisé en matériau thermodurcissable et comprenant un clip (8) de fixation de l'élément (2) à un autre élément (16), **caractérisé en ce qu'**il comprend les étapes suivantes :
- on place une feuille (29) de matériau thermodurcissable dans un moule, la feuille (29) comprenant à sa surface une bande (30) en matériau thermodurcissable avec une charge élastomère, la bande (30) étant le précurseur du clip (8), la bande (30) étant placé en partie en regard d'une cavité (32) ménagée dans une partie inférieure du moule,
- on ferme le moule,
- on exerce une pression sur la feuille (29), le matériau thermodurcissable comprenant une charge élastomère entrant dans la cavité,
- on ouvre le moule,
- on extrait l'élément (2) formé du moule.

9. Procédé selon la revendication 8, dans lequel la bande (30) ne pénètre pas entièrement dans la cavité (32).

10. Procédé selon l'une quelconque des revendications 8 ou 9, dans lequel on utilise une feuille (29) permettant de combler des cavités d'une partie inférieure (28) du moule.
